# EUROPEAN PATENT APPLICATION

(11) **EP 2 774 901 A1**
(43) Date of publication of application: **10.09.2014**
(21) Application number: 13157921.1
(22) Date of filing: 06.03.2013
(51) Int. Cl.: C04B 28/02, C04B 103/12, C04B 20/10

(54) **Method for producing coated particles, suspension of coated particles and its use**

(71) Applicant: Nordkalk OY AB, 21600 Pargas (FI)
(72) Inventor: Somervuori, Erno, 20450 TURKU (FI); Södergård, Mikael, 20880 TURKU (FI)
(74) Representative: Turun Patenttitoimisto Oy

(57) **Abstract**

The invention relates to a method for producing of coated particles, which are suitable for manufacture of concrete. The method comprises obtaining or forming a first aqueous suspension of carrier particles, and adding water-soluble silicate, such as sodium silicate, and a water-soluble calcium source, such as calcium oxide or calcium hydroxide, to the first aqueous suspension. The suspension is mixed, whereby a coating comprising calcium silicate hydrate, CHS, is formed on at least a part of the surface of the carrier particles and dry content of the obtained suspension is > 10 weight-%. The invention relates also to the obtained suspension and its use.

## Description

The invention relates to a method for producing coated particles, a suspension of coated particles and its use according to the preambles of the enclosed independent claims.

Concrete is one of the most popular construction materials nowadays. It comprises coarse aggregate, such as gravel, sand or limestone, water and cement. When cement reacts with water, it forms calcium silicate hydrate, CSH, which acts as glue and binds the coarse aggregates together. The binding reactions occur on the surface of the coarse aggregates, which should promote the binding reaction. The desire is currently to reduce the amount of cement needed for producing concrete, because the manufacture of cement produces large emissions of greenhouse gases, mainly carbon dioxide.

Supplementary materials may also be used for making concrete, in order to reduce the usage of Portland cement. Such supplementary materials are, for example, limestone filler, granulated recycled concrete, fly ash, granulated blast furnace slag, etc., which are readily available, and many of them may end up to landfills, if not properly utilised. These materials may not, however, be optimal for promoting the binding reaction on the surface of the aggregate. Thus, there may be need to increase the amount of used cement or to increase reaction times, which may impair the overall process economy and efficiency. There exists thus a need to improve the suitability of the supplementary materials for concrete production, together with a general desire to reduce the amount of cement needed.

An object of this invention is to minimise or even totally eliminate the disadvantages existing in the prior art.

An object is also to provide a method with which coated particles suitable for manufacturing of concrete are effectively produced in a simple manner.

A further object of the invention is to provide coated particles that are useful in improving the properties of concrete, or to improve the reaction speed of the concrete forming reactions.

These objects are obtained with the invention having the characteristics presented below in the characterising parts of the independent claims.

Typical method according to the present invention for producing of coated particles, which are suitable for manufacture of concrete, the method comprising
- obtaining or forming a first aqueous suspension of carrier particles,
- adding a water-soluble silicate and a water-soluble calcium source, such as calcium oxide or calcium hydroxide, to the first aqueous suspension,
- mixing the suspension, whereby a coating comprising calcium silicate hydrate, CHS, is formed on at least a part of the surface of the carrier particles and the dry content of suspension is > 10 weight-%.

Typical suspension of coated particles according to the present invention comprises
- carrier particles,
- a coating layer attached to the carrier particles and comprising calcium silicate hydrate, CHS, the coating layer at least partly covering the surface of the carrier particles, whereby at least part of the coated particles have a specific surface area > 200 m²/kg, preferably > 2000 m²/kg, and the suspension has and a dry content > 10 weight-%.

Typical use of the suspension of the coated particles produced according to the present invention is for improving properties of concrete.

Now it has been surprisingly found out that a layer of calcium silicate hydrate may be formed on at least a part of the surface of a carrier particle by simply adding a water-soluble silicate and a water-soluble calcium source to an aqueous suspension of carrier particles. The formed coating increases the surface area of the particles, making them more favourable for binding reactions during concrete formation and hardening. The coating layer improves also the reactivity of the aggregates and increases the reaction speed of the binding reactions. Now it has also surprisingly found out that the process can be carried out by using high dry content of the carrier particles in the aqueous suspension, which provides a plurality of advantages. There is no need for separate separation steps of coated particles and no need for separate drying steps. Thus the aqueous suspension of carrier particles is directly transportable to the customers and building sites.

According to one embodiment of the invention limestone particles, particles in recycled slurry from concrete production, fly ash, ground granulated blast furnace slag, calcium carbonate particles, metakaolin particles, sintered metakaolin particles, silicate particles, particles of crushed rock or surplus stone from limestone production may be used as carrier particles in manufacture of coated particles. Preferably the carrier particles are selected from calcium carbonate particles, fly ash, or ground granulated blast furnace slag.

The carrier particles have typically a diameter of 0.05 - 100 µm, preferably 0.5 - 20 µm, more preferably 0.5-10 µm. It is possible to comminute the carrier particle material to a suitable particle size before forming the aqueous suspension. Comminuting may be performed by any suitable method with which mechanical energy is applied to the material, for example by milling or crushing.

According to one embodiment of the invention recycled slurry from concrete production and comprising particles is used as the aqueous suspension of carrier particles. In this case, carrier particles are already in form of suspension, into which the water-soluble silica and water-soluble calcium source may be added.

Typically the solids content of the first aqueous suspension comprising carrier particles is 1- 70 weight-%, preferably 2-50 weight-%, typically 10-50 weight-%, more preferably 30 - 50 weight-%, before the addition of water-soluble silicate and water-soluble calcium source. According to one embodiment of the invention the dry solids content of the obtained aqueous suspension of the at least partly coated carrier particles, after mixing with the water-soluble silicate and the water-soluble calcium source, is > 20 weight-%, preferably > 30 weight-%, sometimes up to 60 weight-%, usually in the range of 10 - 50 weight-%, more preferably in the range of 30 - 45 weight-%.

According to one embodiment of the invention the first aqueous suspension may also comprise a polymer plasticizer. It is possible to enhance the dispersion of the particles and increase the solids content of the suspension by adding plasticizing polymers to the first aqueous suspension. Preferably such polymers as superplasticizers, which are used in concrete manufacture, may be used for this purpose. According to one embodiment of the invention a water-soluble plasticizer polymer may be added to the aqueous suspension in amount of 0.05 - 4 weight-%, preferably 1 - 2 weight-%, calculated as dry polymer, for improving the dispersion of the carrier particles.

Preferably the first aqueous suspension consists of solely water as a solvent.

In this application water-soluble silicate means all chemical and physical forms of sodium silicate, such as sodium metasilicate, sodium orthosilicate and sodium pyrosilicate, which are water-soluble. Preferably sodium silicate is used in form of waterglass. Advantageously the used sodium silicate compound has good water solubility.

According to one preferred embodiment of the present invention water-soluble silicate, preferably sodium silicate, is added to the first aqueous suspension before the addition of water-soluble calcium source, such as calcium oxide or calcium hydroxide. It has been observed that this order of addition provides a crystal form of the coating that is favourable for the reaction speed and concrete forming reactions.

Added dosage amounts of the water-soluble silicate and the water-soluble calcium source are calculated based on the surface area of the carrier particles. The surface area may be determined on basis of particle size measurements or by measuring the adsorption of gas on the surface of the carrier particles. The required ratio between silicate and calcium source is calculated from the stoichiometric relation based on the chemical formula for CSH, which is 3CaO-2SiO₂-4H₂O. If water glass is used as the water-soluble silicate, the Na₂O-SiO₂-ratio and solids content of the water glass are taken in account. It is advantageous to add water-soluble calcium source in excess of the stoichiometric ratio in order to secure full precipitation of water-soluble silicate.

The molecule weight of calcium silicate hydrate, CSH is 356.46, whereby 3 moles of CaO and 2 moles of silicate are required. For example, 0.12 mmol calcium silicate hydrate per square meter is needed for a typical coating with a thickness of 8 nm. This corresponds to dose of 26 mg of waterglass having a dry content of 30 weight-% and 30%Na₂O/70%SiO₂ weight ratio per square meter and 14.7 g of pure Ca(OH)₂ on stoichiometrical basis. The additional, excess dosage of Ca(OH)₂ may be 1 to 50 % of the stoichiometric dose, depending on the amount of water used in the suspension.

Water-soluble silicate, such as sodium silicate solution, is typically added to the aqueous suspension in amount 1 - 15 g/l.

After addition of water-soluble silicate, such as sodium silicate, and water-soluble calcium source, such as calcium oxide or calcium hydroxide, the aqueous suspension is thoroughly mixed with a suitable conventional mixing device, such as a high shear mixer with a power of 0.05 to 8 kW per kg suspension, preferably 1 to 4 kW per kg of suspension. A typical mixing time is higher than 5 s, preferably 10 - 300 s, more preferably 30-120 s, in order to guarantee a sufficient coating formation on the carrier particles and preventing their attachment to each other. It is assumed, without wishing to be bound by a theory that the reaction takes place at the surface of the carrier particles and a coating layer of water insoluble calcium silicate hydrate is deposited on the carrier particle surface. By providing a slightly oversaturated solution of calcium silicate hydrate, CSH, the crystallisation is taking place on all available surfaces. Because the carrier particles represent the large surface area, the crystallised CSH is deposited as a thin layer on the surface of the carrier particles. Because of the nature of the CSH crystal structure the formed coating layer is not smooth, but instead rough and has a large specific surface.

According to one embodiment of the invention coated particles have typically a specific surface area in the range of 200 - 40000 m²/kg, preferably 2500 - 12 000 m²/kg. Further, the thickness of the coating layer is typically in the range of 5 - 20 nm, preferably 7-12 nm. The surface area of the coated particles may be determined in a similar manner than the surface area of the carrier particles by measuring the adsorption of gas on the surface of the carrier particles, i.e. BET method.

Typically at least 60 %, preferably at least 75 %, more preferably at least 80 %, sometimes even > 90 % of the coated particles have a specific surface area > 2000 m²/kg.
According to one embodiment of the invention at least part of the liquid phase of the aqueous suspension may be separated from the coated particles after the formation of the coating layer on the carrier particles. The separation of the coated particles from the liquid phase may be performed by any suitable separation method, e.g. by using a press filter. The liquid phase from the separation step of the coated particles typically comprises sodium ions and surplus calcium hydroxide. The liquid phase may be recycled back in the process to the step where the aqueous suspension of carrier particles is formed, and used for forming the aqueous suspension of carrier particles.

According to another embodiment of the invention it is also possible to separate at least a part of the liquid phase of the aqueous suspension from the coated particles in a first separation step and to precipitate calcium hydroxide from the liquid phase from the first separation step with carbon dioxide in order to form calcium carbonate particles. These precipitated calcium carbonate particles can be separated the from the liquid in a second separation step and they can be added to the suspension of coated particles, because such precipitated calcium hydroxide comprising particles have been found to be advantageous for concrete in similar manner as the coated particles.

A second aqueous suspension may be formed of the separated coated filler particles by addition of water. It is also possible to add various conventional additive agents, such as plasticizer, hardening accelerators, retarders, shrinkage reducing additives, air entrainers, defoamers, anti-freezing agents and/or anti-efflorescence agents, to the second aqueous suspension. pH value of the second aqueous suspension is typically adjusted at pH 6 - 7.5

### EXAMPLE

Mix 1 comprises:
650 g of 0.06 - 0.5 mm sand
650 g of 0.06 - 0.5 mm sand
650 g of 0.06 - 0.5 mm sand
844 g of Portland cement, CEM I 52.5R
34 g of Fly Ash from powderized coal combustion
380 g of tap water

Ingredients of Mix 1 are mixed in a laboratory mixer for 2 minutes and 30 seconds. 1900 g of the obtained mortar is placed in an insulated container and the temperature is registered. The starting temperature is 26.1 degrees Celsius. The time for 45 degrees increase is 7 hours and 15 minutes.

Mix 2 comprises
650 g of 0.06 - 0.5 mm sand
650 g of 0.06 - 0.5 mm sand
650 g of 0.06 - 0.5 mm sand
844 g of Portland cement, CEM I 52.5R
Ingredients of Mix 2 are added in the laboratory mixer and mixed for 30 seconds.

Formation of coated particles:
34 g of Fly ash and 380 g of water are added to a beaker and dispersed vigorously.
2.6 g of water glass in liquid form with 30 % dry content is added to the suspension and dispersed vigorously.
2.1 g of industrial grade calcium hydroxide, Ca(OH)₂ is added to the suspension and dispersed vigorously for additionally 60 seconds.

The obtained suspension is added to the laboratory mixer including Mix 2 and mixed for 2 minutes and 30 seconds.

1900 g of the obtained mortar is placed in an insulated container and the temperature is registered. The starting temperature is 27.4 degrees Celsius. The time for 45 degrees increase is 5 hours and 21 minutes.

The faster temperature rise shows that the coating of fly ash with the reaction product of waterglass and calcium hydroxide is significantly increasing the reaction rate of the cement.

Even if the invention is described with reference to what at present seems to be the most practical and preferred embodiments, it is appreciated that the invention shall not be limited to the embodiments described above, but the invention is intended to cover also different modifications and equivalent technical solutions within the scope of the enclosed claims.

## Claims

1. Method for producing of coated particles, which are suitable for manufacture of concrete, the method comprising
- obtaining or forming a first aqueous suspension of carrier particles,
- adding water-soluble silicate, such as sodium silicate, and a water-soluble calcium source, such as calcium oxide or calcium hydroxide, to the first aqueous suspension,
- mixing the suspension, whereby a coating comprising calcium silicate hydrate, CHS, is formed on at least a part of the surface of the carrier particles and dry content of the obtained suspension is > 10 weight-%.

2. Method according to claim 1, **characterised in that** the dry solids content of the obtained aqueous suspension of the at least partly coated carrier particles is > 20 weight-%, preferably > 30 weight-%, more preferably in the range of 30 - 45 weight-%.

3. Method according to claim 1 or 2, **characterised in** using limestone particles, particles in recycled slurry from concrete production, fly ash, ground granulated blast furnace slag, calcium carbonate particles, metakaolin particles, sintered metakaolin particles, silicate particles, particles of crushed rock or surplus stone from limestone production as carrier particles.

4. Method according to claim 1, **characterised in** selecting the water-soluble silicate means from the group consisting of sodium metasilicate, sodium orthosilicate and sodium pyrosilicate.

5. Method according to any of preceding claims 1 - 4, **characterised in** adding a water soluble polymer to the aqueous suspension in amount of 0.05 - 4 weight-%, preferably 1 - 2 weight-%, calculated as dry polymer, for improving the dispersion of the carrier particles

6. Method according to any of preceding claims 1 - 5, **characterised in** comminuting the carrier particles to a size 0.05 - 100 µm, preferably 0.5 - 20 µm, before forming of the aqueous suspension.

7. Method according to claim 1, **characterised in** adding to the first aqueous suspension water-soluble silicate in amount 1-15 g/l.

8. Method according to claim 1, **characterised in** mixing the aqueous suspension after the addition of water-soluble silicate and water-soluble calcium source with a a high shear mixer with a power of 0.05 to 8 kW per kg suspension, preferably 1 to 4 kW per kg of suspension and using a mixing time higher than 5 s, preferably 10 - 300 s, more preferably 30-120 s.

9. Method according to claim 1, **characterised in** separating at least part of liquid phase of the aqueous suspension from the coated particles, and using the liquid phase for forming the aqueous suspension of carrier particles.

10. Method according to claim 1, **characterised in**
- separating at least a part of the liquid phase of the aqueous suspension from the coated particles in a first separation step,
- precipitating calcium hydroxide from the liquid phase from the first separation step with carbon dioxide in order to form calcium carbonate particles, and
- separating the precipitated calcium carbonate particles from the liquid in a second separation step,
- adding the precipitated calcium carbonate particles back to the aqueous suspension of coated particles.

11. Suspension of coated particles produced by using a method according to any of claims 1-10, comprising
carrier particles, having a coating layer attached to the carrier particles and comprising calcium silicate hydrate, CHS, the coating layer at least partly covering the surface of the carrier particles, whereby at least part of the coated particles have a specific surface area > 200 m²/kg, preferably > 2000 m²/kg, the suspension havinga dry content > 10 weight-%.

12. Suspension according to claim 11, **characterised in that** the coated particles have a specific surface area of 200 - 40000 m²/kg, preferably 2500 - 12 000 m²/kg.

13. Suspension according to claim 11 or 12, **characterised in that** the carrier particles limestone particles, particles in recycled slurry from concrete production, fly ash, ground granulated blast furnace slag, calcium carbonate particles, metakaolin particles, sintered metakaolin particles, silicate particles, particles of crushed rock or surplus stone from limestone production, or their mixture, and the carrier particles have a diameter of 0.05 - 100 µm, preferably 0.5 - 20 µm, more preferably 0.5-10 µm.

14. Suspension according to any of preceding claims 11 - 13, **characterised in that** the thickness of the coating layer on the carrier particle is 5 - 20 nm, preferably 7-12 nm.

15. Use of the suspension of coated particles produced according to any of claims 11 - 14 for improving properties of concrete.
